# EUROPEAN PATENT APPLICATION

(11) **EP 3 110 118 A1**
(43) Date of publication of application: **28.12.2016**
(21) Application number: 15751894.5
(22) Date of filing: 13.02.2015
(51) Int. Cl.: H04M 9/00

(54) **TELEPHONE DEVICE AND TELEPHONE SYSTEM USING SAME**

(30) Priority: 20.02.2014 JP 2014031118
(71) Applicant: Panasonic Intellectual Property Management Co., Ltd., Osaka-shi, Osaka 570-6207 (JP)
(72) Inventor: KOHROGI, Takeshi, Osaka-shi Osaka 540-6207 (JP); MATSUMOTO, Kazuhiro, Osaka-shi Osaka 540-6207 (JP); NAGATA, Masahiro, Osaka-shi Osaka 540-6207 (JP); KURITA, Masanori, Osaka-shi Osaka 540-6207 (JP); NISHIO, Akihiko, Osaka-shi Osaka 540-6207 (JP); HOSHIBA, Keitaro, Osaka-shi Osaka 540-6207 (JP)
(74) Representative: Appelt, Christian W.
(86) International application number: PCT/JP2015/000686
(87) International publication number: WO 2015/125451

(57) **Abstract**

A voice communication device that can appropriately select one voice communication terminal from a plurality of voice communication terminals as a partner terminal, and a voice communication system using the same are provided. The voice communication device (1) includes a connection unit (11), a selection unit (12), and a voice communication unit (13). The connection unit (11) establishes links with the plurality of voice communication terminals (21, 22, 23, etc.). The selection unit (12) selects, in a state in which the links have been established with the plurality of voice communication terminals (21, 22, 23, etc.), one voice communication terminal (2) as the partner terminal from the plurality of voice communication terminals (21, 22, 23, etc.). The voice communication unit (13) includes a function of performing voice communication with the partner terminal selected by the selection unit (12). The selection unit (12) selects, according to priorities that are respectively set to the plurality of voice communication terminals (21, 22, 23, etc.), the one voice communication terminal (2) as the partner terminal from the plurality of voice communication terminals (21, 22, 23, etc.), in order of descending priorities.

## Description

### Technical Field

This invention, in general, relates to voice communication devices and voice communication systems using the same, and specifically relates to a voice communication device that is configured to select one voice communication terminal from a plurality of voice communication terminals as a partner terminal and perform voice communication, and a voice communication system using the same.

### Background Art

Heretofore, an intercom system that includes a master arranged indoors and a slave arranged outdoors has been widely known as an exemplary voice communication system using a voice communication device (refer to Document 1: JP 2006-325140 A, for example).

An intercom system described in Document 1 includes a plurality of sub-masters that are different from a master and are respectively arranged in rooms that are different from each other. In this system, the master and the plurality of sub-masters are each provided with a plurality of individual call buttons and one simultaneous call button. The master or one of the sub-masters, upon an individual call button thereof being operated, transmits an individual call signal to any one of the master, the plurality of sub-masters, and a slave that corresponds to this operation, and one to one voice communication (individual voice communication) is initiated between two terminals among the master, the plurality of sub-masters, and a slave. Therefore, the slave can perform individual voice communication with one of the master and the plurality of sub-masters.

Incidentally, in the case where one voice communication device designates one terminal from a plurality of voice communication terminals as a partner terminal and performs individual voice communication using the configuration described in Document 1, a user needs to operate an individual call button that corresponds to the partner terminal in the voice communication device. However, in the case where the slave is the voice communication device, the user (visitor) does not know in what room a person is present, and therefore it is difficult for the user to appropriately select one voice communication terminal from the plurality of voice communication terminals (master and sub-masters) as the partner terminal.

### Summary of Invention

The present invention has been made in view of the above-described problems, and an object of the present invention is to provide a voice communication device that is configured to appropriately select one voice communication terminal from a plurality of voice communication terminals as a partner terminal, and a voice communication system using the same.

The voice communication device of the present invention includes: a connection unit configured to establish links (communications links) with a plurality of voice communication terminals; a selection unit configured to select, in a state in which the links have been established between the connection unit and the plurality of voice communication terminals, one voice communication terminal as a partner terminal from the plurality of voice communication terminals; and a voice communication unit including a function of performing voice communication with the partner terminal selected by the selection unit. The selection unit is configured to select, according to priorities that are respectively set to the plurality of voice communication terminals, the one voice communication terminal as the partner terminal from the plurality of voice communication terminals, in order of descending the priorities.

The voice communication system of the present invention includes the voice communication device and the plurality of voice communication terminals.

### Brief Description of Drawings

FIG. 1 is a schematic block diagram of a voice communication system according to Embodiment 1;
FIG. 2 is a diagram for describing a schematic configuration of the voice communication system according to Embodiment 1;
FIG. 3 is a diagram for describing operations of the voice communication system according to Embodiment 1; and
FIG. 4 is a schematic block diagram of a voice communication system according to Embodiment 2.

### Description of Embodiments

### Embodiment 1

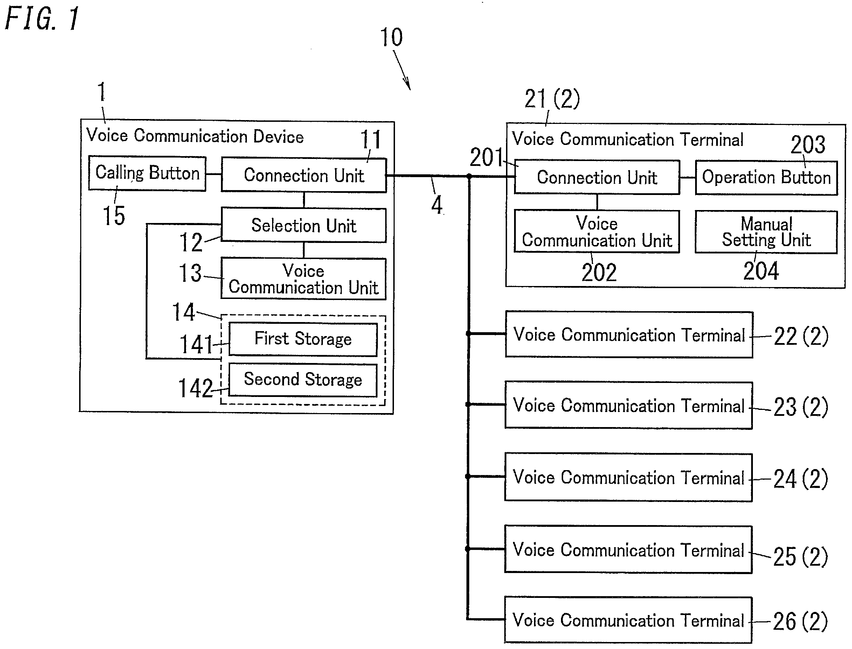

A voice communication device 1 according to the present embodiment includes a connection unit 11, a selection unit 12, and a voice communication unit 13, as shown in FIG. 1.

The connection unit 11 is configured to establish links with a plurality of voice communication terminals 21, 22, 23, etc.

The selection unit 12 is configured to, in a state in which links are established between the connection unit 11 and the plurality of voice communication terminals 21, 22, 23, etc., select one voice communication terminal from the plurality of voice communication terminals 21, 22, 23, etc., as a partner terminal.

The voice communication unit 13 includes a function for performing voice communication with the partner terminal that has been selected by the selection unit 12.

Here, the selection unit 12 is configured to select the one voice communication terminal as the partner terminal, according to a priority set to each of the plurality of voice communication terminals 21, 22, 23, etc., such that the voice communication terminal is sequentially selected from the plurality of voice communication terminals 21, 22, 23, etc. in order of descending priorities.

That is, the voice communication device 1 according to the present embodiment automatically selects one voice communication terminal from the plurality of voice communication terminals 21, 22, 23, etc. as a partner terminal that is a partner with which voice communication is to be performed, according to the priority set to each of the plurality of voice communication terminals 21, 22, 23, etc. Therefore, if the priorities are appropriately set, a voice communication terminal with a higher priority is automatically selected as the partner terminal, even if a user (talker on a voice communication device 1 side) does not know which one of the plurality of voice communication terminals 21, 22, 23, etc. is appropriate for the partner terminal. As a result, the voice communication device 1 can appropriately select one voice communication terminal from the plurality of voice communication terminals 21, 22, 23, etc. as the partner terminal.

Also, the voice communication system 10 according to the present embodiment includes the voice communication device 1 and the plurality of voice communication terminals 21, 22, 23, etc.

Here, in an example in FIG. 1, six voice communication terminals, namely a voice communication terminal 21, a voice communication terminal 22, a voice communication terminal 23, a voice communication terminal 24, a voice communication terminal 25, and a voice communication terminal 26, are provided as the plurality of voice communication terminals 21, 22, 23, etc. Note that the number of voice communication terminals is not limited thereto, and may be two or more. Hereinafter, each of the voice communication terminals 21, 22, 23, etc. will be referred to as a "voice communication terminal 2" when they are not specifically distinguished therebetween.

Hereinafter, the voice communication device 1 according to the present embodiment and the voice communication system 10 using the same will be described in detail. Note that the configuration described below is merely an example of the present invention, and the present invention is not limited to the following embodiment. In addition to the embodiment, various modifications can be made according to the design or the like, as long as they do not depart from the technical concept of the present invention.

In the following embodiment, although an intercom system for a detached house will be described as an example of the voice communication system 10, it is sufficient that the voice communication system 10 is a system in which voice communication can be performed between the voice communication device 1 and one (partner terminal) of the plurality of voice communication terminals 21, 22, 23, etc. Therefore, the voice communication system 10 is not limited to the intercom system for a detached house, and can be applied to, for example, an intercom system for an apartment building, or various systems other than the intercom system (such as a nurse call system or safety check system).

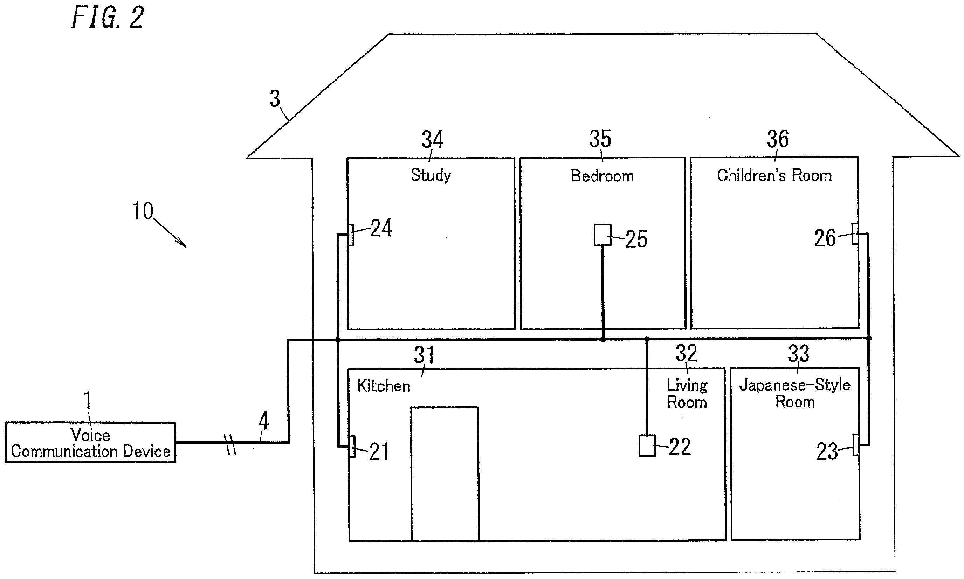

The voice communication system 10 according to the present embodiment includes the voice communication device 1 installed outside a house 3, and a plurality of voice communication terminals 21, 22, 23, etc. that are installed respectively in a plurality of locations inside the house 3, as shown in FIG. 2. Here, the voice communication device 1 is an intercom slave that is installed to an entrance porch or a gate door. The plurality of voice communication terminals 21, 22, 23, etc. are a master and sub-masters that are respectively installed in a kitchen 31, a living room 32, a Japanese-style room 33, a study 34, a bedroom 35, and a children's room 36. The voice communication terminals 2 are each attached to a wall of the installation room, and are electrically connected to the voice communication device 1 via a two-wire signal line 4.

Note that, in the present embodiment, the master and the sub-masters are not specifically distinguished therebetween, and all the plurality of voice communication terminals 21, 22, 23, etc. are assumed to be directly connected to the voice communication device 1 for the sake of simplifying explanation. In actuality, the voice communication device 1 may be directly connected to a voice communication terminal 2 serving as the master, and a voice communication terminal 2 serving as the sub-master may be connected to the voice communication device 1 via the voice communication terminal 2 serving as the master.

The voice communication device 1 according to the present embodiment further includes a memory 14 and a calling button 15, as shown in FIG. 1, in addition to the (first) connection unit 11, the selection unit 12, and the (first) voice communication unit 13 that are described above. Furthermore, although an illustration is omitted in FIG. 1, the voice communication device 1 includes a camera and video processing unit that are not shown, and is configured to transmit video captured by the camera to the voice communication terminals 2 from the video processing unit.

The connection unit 11 is configured to control links between the plurality of voice communication terminals 21, 22, 23, etc., and performs establishment and disconnection of the links. The "link" mentioned here refers to a communications link. In the present embodiment, the connection unit 11 is configured to establish links with six voice communication terminals 21, 22, 23, etc. at the same time. Hereinafter, a period from when a link is established until when the link is disconnected is referred to as an "establishment period".

The selection unit 12 is configured to select, according to priorities stored in the memory 14, one voice communication terminal 2 as the partner terminal in order of descending priorities from the plurality of voice communication terminals 21, 22, 23, etc. That is, the selection unit 12, first, selects a voice communication terminal 2 with the highest priority as the partner terminal from the plurality of voice communication terminals 21, 22, 23, etc. The priorities will be described later.

Also, in the present embodiment, the selection unit 12 is configured to perform change processing in which the voice communication terminal 2 selected as the partner terminal is changed every time end processing of the voice communication with the partner terminal is performed by the voice communication unit 13 in the establishment period from when the link has been established until when the link is disconnected. In the change processing, the selection unit 12 changes the voice communication terminal 2 selected as the partner terminal from the plurality of voice communication terminals 21, 22, 23, etc. from a first voice communication terminal, which is currently selected as the partner terminal, to a second voice communication terminal, which has a next highest priority to the first voice communication terminal. With this change processing, the partner terminal is sequentially changed in order of descending priorities every time the end processing of voice communication is performed.

The voice communication unit 13 includes a microphone (not shown) that converts voice into an electric signal, a speaker (not shown) that converts an electric signal to voice, and a voice communication processing unit (not shown). The voice communication processing unit includes a two-wire/four-wire conversion circuit (hybrid circuit). The voice communication unit 13 configured in this way enables voice communication with the voice communication terminal 2 selected as the partner terminal by the selection unit 12, using the microphone and the speaker.

The voice communication unit 13, in a state in which the link is established, enters a state in which voice communication with the partner terminal is enabled as a result of transmitting a voice communication start signal for requesting start of voice communication to a voice communication terminal 2 that has been selected as the partner terminal by the selection unit 12. Also, in the present embodiment, the voice communication unit 13 performs end processing of voice communication with the partner terminal when the calling button 15 is operated in a state in which the voice communication with the partner terminal is enabled.

In short, in the present embodiment, the selection unit 12 is configured to select a voice communication terminal 2 as the partner terminal in order of descending priorities by sequentially switching the voice communication terminal 2 serving as the partner terminal from the plurality of voice communication terminals 21, 22, 23, etc. The voice communication unit 13 is configured to perform voice communication with the partner terminal every time a voice communication terminal 2 to serve as the partner terminal is selected by the selection unit 12.

The memory 14 is a memory into which data can be rewritten, and is preferably a nonvolatile memory. At least priorities respectively set to the plurality of voice communication terminals 21, 22, 23, etc., are stored in the memory 14. That is, an identifier (such as an address) for identifying the voice communication terminals 2 and a priority thereof are stored in the memory 14 so as to be associated one to one for each of the plurality of voice communication terminals 21, 22, 23, etc. The priority is one of n stages from "1" to "n" (n is the number of voice communication terminals 2), and is assigned to each of the plurality of voice communication terminals 21, 22, 23, etc., "1" being the highest and descending in order of "2", "3", "4", etc. Here, one priority is assigned to only one voice communication terminal 2, and the same priority is not assigned to different voice communication terminals 2.

The setting method of the priority will be described later. Also, the memory 14 includes a first storage 141 and a second storage 142 in the example shown in FIG. 1, and the first storage 141 and the second storage 142 will be described later.

The calling button 15 is to be operated (push operation) by a first user who is a talker (visitor) on the voice communication device 1 side. In the present embodiment, when the calling button 15 is operated in a state in which the link is disconnected, the voice communication device 1 establishes links with the plurality of voice communication terminals 21, 22, 23, etc. using the connection unit 11. Furthermore, when the calling button 15 is operated in a state in which voice communication with a voice communication terminal 2 serving as the partner terminal is established, the voice communication device 1 is configured to perform end processing of the voice communication using the voice communication unit 13, as described above.

Note that the voice communication device 1 includes a CPU (Central Processing Unit), and the functions of the connection unit 11, the selection unit 12, and the like are realized by the CPU executing a program that is in the memory 14. The program may be pre-stored in the memory 14, or may be provided via a storage medium such as a memory card that stores the program or an electric communication line such as the Internet.

On the other hand, each voice communication terminal 2 includes a (second) connection unit 201, a (second) voice communication unit 202, an operation button 203, and a manual setting unit 204, as shown in FIG. 1. Furthermore, the voice communication terminal 2 includes a liquid crystal display (not shown) that displays a video captured by the camera in the voice communication device 1. The voice communication terminal 2 realizes a voice communication function with the voice communication device 1 and a video display function by sending and receiving voice data, video data, and furthermore control data to and from the voice communication device 1.

The connection unit 201 is configured to establish a link with the voice communication device 1, strictly speaking, with the connection unit 11 in the voice communication device 1.

The voice communication unit 202 is configured similarly to the voice communication unit 13 in the voice communication device 1, and includes a microphone, a speaker, and a voice communication processing unit that are not shown. The voice communication unit 202 enables voice communication with the voice communication device 1 by using the microphone and the speaker.

The voice communication unit 202, upon receiving a voice communication start signal from the voice communication device 1 after the voice communication terminal 2 has been selected as the partner terminal of the voice communication device 1 in a state in which the link is established, enters a state in which voice communication with the voice communication device 1 is enabled. Also, in the present embodiment, when the operation button 203 is operated in a state in which voice communication with the voice communication device 1 is enabled, the voice communication unit 202 performs end processing of the voice communication with the voice communication device 1.

The operation button 203 is operated by a second user who is a talker (resident) on the voice communication terminal 2 side. In the present embodiment, when the operation button 203 is operated in a state in which the link with the voice communication device 1 has been disconnected, the voice communication terminal 2 causes the connection unit 201 to establish a link with the voice communication device 1 or another voice communication terminal 2. Furthermore, the voice communication terminal 2 is configured to cause, when the operation button 203 is operated in a state in which voice communication with the voice communication device 1 has been enabled, the voice communication unit 202 to perform end processing of the voice communication, as described above.

Incidentally, in the present embodiment, the priority of each of the plurality of voice communication terminals 21, 22, 23, etc. is manually set by a second user (resident) using the manual setting unit 204 in the voice communication terminal 2. Specifically, the manual setting unit 204 includes a switch (not shown) such as a DIP switch or a rotary switch, and determines the priority of the voice communication terminal 2 according to the operation result of the switch. Here, the own priority of the voice communication terminal 2 is set by the manual setting unit 204 (that is, the priority of the voice communication terminal 21 in the case of the voice communication terminal 21). Note that, in the voice communication terminal 2, the operation button 203 or a liquid crystal display may be used to set a priority using the manual setting unit 204.

Hereinafter, as an example, it is assumed that the priority of the voice communication terminal 21 is set to "3", the priority of the voice communication terminal 22 is set to "4", the priority of the voice communication terminal 23 is set to "5", the priority of the voice communication terminal 24 is set to "2", the priority of the voice communication terminal 25 is set to "1", and the priority of the voice communication terminal 26 is set to "6", as shown in TABLE 1. That is, when the plurality of voice communication terminals 21, 22, 23, etc. are arranged in order of descending priorities, the order will be the voice communication terminal 25 in the bedroom 35, the voice communication terminal 24 in the study 34, the voice communication terminal 21 in the kitchen 31, the voice communication terminal 22 in the living room 32, the voice communication terminal 23 in the Japanese-style room 33, and the voice communication terminal 26 in the children's room 36.

**[TABLE 1]**

| Priority | 1 | 2 | 3 | 4 | 5 | 6 |
|---|---|---|---|---|---|---|
| Voice communication terminal | Bedroom | Study | Kitchen | Living room | Japanese-style room | Children's room |

Note that, in TABLE 1, the plurality of voice communication terminals 21, 22, 23, etc. are distinguished by the respective installation locations (such as a living and a bedroom), in actuality, the plurality of voice communication terminals 21, 22, 23, etc. are distinguished by the identifiers in the memory 14, as described above. The same applies to TABLEs 2 and 3 described later.

Each voice communication terminal 2 transmits (notifies) the priority set by the manual setting unit 204 to the voice communication device 1 every time a link with the voice communication device 1 is established, for example. Accordingly, the voice communication device 1 can collect the priorities set to the respective voice communication terminals 2 from the plurality of voice communication terminals 21, 22, 23, etc. The voice communication device 1 stores the collected priorities of the plurality of voice communication terminals 21, 22, 23, etc. in the memory 14.

Note that the voice communication terminal 2 includes a CPU, and realizes functions of the connection unit 201 and the like by the CPU executing a program in a memory (not shown). The program may be pre-stored in the memory, or may be provided via a storage medium such as a memory card that stores the program or an electric communication line such as the Internet.

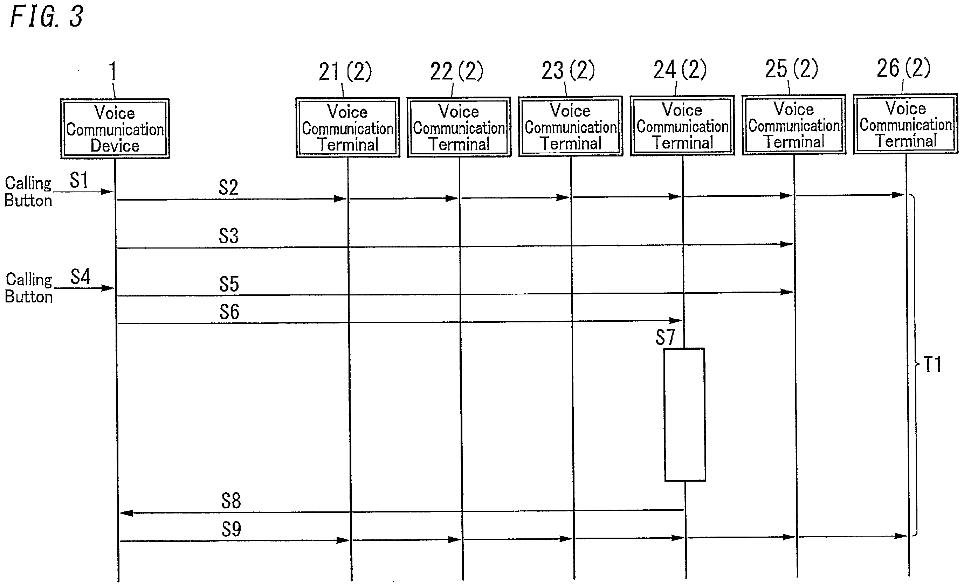

Next, operations of the voice communication system 10 of the present embodiment will be described with reference to FIG. 3. FIG. 3 shows the operations of the voice communication system 10 in the case where voice communication is being established between the voice communication terminal 24 in the study 34 and the voice communication device 1 when calling is performed from the voice communication device 1.

The voice communication device 1, upon the calling button 15 being operated (S1), transmits a calling signal to the plurality of voice communication terminals 21, 22, 23, etc. at the same time (S2). The voice communication device 1 causes the connection unit 11 to establish links with the plurality of voice communication terminals 21, 22, 23, etc. due to this calling signal.

In a state in which the links are established, that is, in an establishment period T1, the voice communication device 1 sequentially selects a voice communication terminal 2 as the partner terminal from the plurality of voice communication terminals 21, 22, 23, etc. in order of descending priorities, and tries voice communication using the communication unit 13. That is, the voice communication device 1, first, transmits the voice communication start signal to the voice communication terminal 25 in the bedroom 35 with the highest priority among the plurality of voice communication terminals 21, 22, 23, etc. (S3), and starts voice communication with the voice communication terminal 25 serving as the partner terminal.

Here, if there is no response from the voice communication terminal 25 serving as the partner terminal, the first user (visitor) operates the calling button 15 (S4). Thus, the voice communication device 1 transmits a voice communication end signal to the voice communication terminal 25 serving as the partner terminal (S5), and performs end processing of voice communication with the partner terminal by the voice communication unit 13.

Thereafter, the voice communication device 1 newly selects the voice communication terminal (second voice communication terminal) 24 in the study 34 with the next highest priority to the voice communication terminal (first voice communication terminal) 25 that is currently selected as the partner terminal, with the selection unit 12, from the plurality of voice communication terminals 21, 22, 23, etc. Then, the voice communication device 1 transmits the voice communication start signal to the voice communication terminal 24 that is newly selected as the partner terminal (S6), and starts voice communication with the voice communication terminal 24 serving as the partner terminal.

Here, if there is a response from the voice communication terminal 24 serving as the partner terminal, the first user (visitor) performs voice communication with the second user (resident) (S7). Then, when ending the voice communication, the second user operates the operation button 203, and the voice communication terminal 24 serving as the partner terminal transmits the voice communication end signal to the voice communication device 1 (S8).

The voice communication device 1, upon receiving the voice communication end signal from the voice communication terminal 2, ends voice communication with the voice communication terminal (partner terminal) 24 without selecting a next partner terminal, and transmits a disconnect signal to the plurality of voice communication terminals 21, 22, 23, etc. at the same time (S9). With this disconnect signal, the voice communication device 1 disconnects the links with the plurality of voice communication terminals 21, 22, 23, etc.

According to the voice communication system 10 of the present embodiment described above, the selection unit 12 in the voice communication device 1 is configured to select a voice communication terminal 2 as the partner terminal according to priorities that are respectively set to the plurality of voice communication terminals 21, 22, 23, etc. Here, the selection unit 12 selects a voice communication terminal 2 as the partner terminal from the plurality of voice communication terminals 21, 22, 23, etc. in order of descending priorities. Therefore, in the voice communication device 1, one voice communication terminal 2 is automatically selected as the partner terminal according to the priorities.

Accordingly, when the priorities are appropriately set, even if the first user (talker on the voice communication device 1 side) does not know which voice communication terminal 2 among the plurality of voice communication terminals 21, 22, 23, etc. is appropriate to be the partner terminal, an appropriate voice communication terminal 2 is automatically selected. In short, as a result of setting priorities to the plurality of voice communication terminals 21, 22, 23, etc. such that the priority of a voice communication terminal 2 increases as the probability of having a person nearby increases, the voice communication device 1 can start voice communication from a voice communication terminal 2 with which voice communication is likely to be established. As a result, the voice communication device 1 can appropriately select one voice communication terminal 2 as the partner terminal from the plurality of voice communication terminals 21, 22, 23, etc.

Note that, although it is conceivable that the voice communication device 1 performs voice communication with all of the plurality of voice communication terminals 21, 22, 23, etc. as the partner terminal at the same time, in this case, noise and an increase in power consumption as a result of voice being outputted from all the voice communication terminals 21, 22, 23, etc. become an issue. In the voice communication system 10 of the present embodiment, since the voice communication device 1 selects a voice communication terminal 2 one by one to perform voice communication therewith, noise and an increase in power consumption can be avoided.

Also, the selection unit 12 is preferably configured, as the present embodiment, so as to select a voice communication terminal 2 as the partner terminal in order of descending priorities by sequentially switching a voice communication terminal 2 to serve as the partner terminal from the plurality of voice communication terminals 21, 22, 23, etc. According to this configuration, the selection unit 12 can select a voice communication terminal 2 as the partner terminal from the plurality of voice communication terminals 21, 22, 23, etc. in order of descending priorities, not only in the case of first selecting the partner terminal, but also in the case of switching a voice communication terminal 2 to serve as the partner terminal.

Furthermore, in this case, the voice communication unit 13 is preferably configured to, as the present embodiment, perform voice communication with the partner terminal every time the selection unit 12 selects a voice communication terminal 2 as the partner terminal. According to this configuration, the voice communication unit 13 can perform voice communication with a voice communication terminal 2 one by one from the plurality of voice communication terminals 21, 22, 23, etc. in order of descending priorities.

Also, the selection unit 12 is preferably configured to, as the present embodiment, perform change processing in which the partner terminal is changed every time the voice communication unit 13 performs end processing of voice communication with the partner terminal in an establishment period from when the links are established until when the links are disconnected. In the change processing, the selection unit 12 changes a voice communication terminal 2 selected as the partner terminal from a first voice communication terminal that is currently selected as the partner terminal to a second voice communication terminal with the next highest priority to the first voice communication terminal from the plurality of voice communication terminals 21, 22, 23, etc.

According to this configuration, the voice communication device 1 sequentially changes the partner terminal every time the voice communication unit 13 performs end processing of voice communication with the partner terminal in the establishment period, the voice communication terminal 2 being selected in order of descending priorities. Accordingly, the voice communication device 1 can sequentially try voice communication with the plurality of voice communication terminals 21, 22, 23, etc. in order of descending priorities, and a time required to establish voice communication with a voice communication terminal 2 can be reduced.

Note that, in the present embodiment, a configuration of the voice communication device 1 in which the end processing of voice communication with the partner terminal by the voice communication unit 13 is performed due to an operation of the calling button 15 is illustrated, but the configuration is not limited thereto. That is, the voice communication device 1 may be configured such that the end processing of voice communication is performed due to an operation of an operation unit other than the calling button 15, or may be configured such that the end processing of voice communication is performed every time a predetermined time elapses.

Also, in the present embodiment, a configuration of the voice communication device 1 in which, upon receiving the voice communication end signal from a voice communication terminal 2, the voice communication with the voice communication terminal (partner terminal) 2 is ended without selecting a next partner terminal is illustrated, but the configuration is not limited thereto. That is, the final end processing of voice communication between the voice communication device 1 and a voice communication terminal 2 may be started not by the voice communication terminal 2, but by a specific operation (such as long press) made to the calling button 15 of the voice communication device 1, for example. In this case, final end of voice communication between the voice communication device 1 and the voice communication terminal 2 (including disconnection of the links) is performed by an instruction not from the second user but from the first user.

Also, the manual setting unit for manually setting the priority of each of the voice communication terminals 2 may be provided not in the voice communication terminal 2 but in the voice communication device 1. In the case where the manual setting unit is provided in the voice communication device 1, the manual setting unit includes switches (not shown) such as DIP switches or rotary switches for respective voice communication terminals 2 such that priorities can be set to the respective plurality of voice communication terminals 21, 22, 23, etc. The priorities set by the manual setting unit in the voice communication device 1 may be stored in the memory 14, or may be held as states of contacts of the switches.

Also, although the communication system between the voice communication device 1 and the voice communication terminal 2 is a wired system via the signal line 4 in the present embodiment, the communication system is not limited thereto, and may be a wireless system in which a radio wave is used as the transmission medium or a combination of a wired system and a wireless system.

Note that configurations for receiving input operations from a user such as the calling button 15 and the manual setting unit in the voice communication device 1 and the operation button 203 and the manual setting unit 204 in the voice communication terminal 2 are not limited to mechanical switches, and icons on a touch panel display, for example, may be used. That is, in the case where an apparatus in which a touch panel display is adopted as the user interface such as a tablet terminal or a smartphone is used as the voice communication device 1 or the voice communication terminal 2, an icon or the like on the touch panel display can be used as an input unit such as a calling button.

Next, a first modification and a second modification in which setting of the priorities is different from that in the embodiment described above will be described.

In the first modification, the voice communication device 1 includes the first storage 141 (refer to FIG. 1) to store patterns so as to correspond to time slots one to one. Each of the patterns is a set of the priorities for a corresponding time slot of the plurality of voice communication terminals 21, 22, 23, etc. The selection unit 12 is configured to select a partner terminal according to priorities of a pattern corresponding to a current time slot among the plurality of patterns stored in the first storage 141.

Specifically, a portion of a storage region in the memory 14 is used as the first storage 141. A set (combination) of priorities for respective time slots, as shown in TABLE 2, for example, is stored in the first storage 141.

**[TABLE 2]**

| | 1 | 2 | 3 | 4 | 5 | 6 |
|---|---|---|---|---|---|---|
| 22:00 to 8:00 | Bedroom | Study | Kitchen | Living room | Japanese-style room | Children's room |
| 8:00 to 18:00 | Living room | Kitchen | Japanese-style room | Children's room | Study | Bedroom |
| 18:00 to 22:00 | Kitchen | Living room | Study | Japanese-style room | Children's room | Bedroom |

The voice communication device 1 includes a clock (not shown) that indicates the current time, the current day of the week, and the like. The selection unit 12, when selecting a voice communication terminal 2 as the partner terminal, selects the partner terminal using priorities of the pattern that corresponds to the time slot (current time slot) under which the current time that the clock indicates falls.

In an example in TABLE 2, in the time slot of 22:00 to 8:00, the voice communication terminals 2 in order of descending priorities will be the voice communication terminal 25 in the bedroom 35, the voice communication terminal 24 in the study 34, the voice communication terminal 21 in the kitchen 31, the voice communication terminal 22 in the living room 32, the voice communication terminal 23 in the Japanese-style room 33, and the voice communication terminal 26 in the children's room 36. Meanwhile, in the time slot of 8:00 to 18:00, the voice communication terminals 2 in order of descending priorities will be the voice communication terminal 22 in the living room 32, the voice communication terminal 21 in the kitchen 31, the voice communication terminal 23 in the Japanese-style room 33, the voice communication terminal 26 in the children's room 36, the voice communication terminal 24 in the study 34, and the voice communication terminal 25 in the bedroom 35.

According to the configuration of the first modification, the voice communication device 1 can select the partner terminal using priorities that are different according to the time slot, and as a result the voice communication device 1 can handle a case where appropriate priorities are different according to the time slot. In the case where the voice communication terminal 2 with a high probability of having a person nearby differs according to the time slot, for example, appropriate priorities can be used according to the time slot.

In the second modification, the voice communication device 1 includes the second storage 142 (refer to FIG. 1) to store sets of the priorities of a plurality of patterns for respective days of the week, a set of the priorities of the plurality of voice communication terminals 21, 22, 23, etc. being one pattern. The selection unit 12 is configured to select the partner terminal according to priorities of a pattern corresponding to a current day of the week among the plurality of patterns stored in the second storage 142.

Specifically, a portion of a storage region in the memory 14 is used as the second storage 142. A set (combination) of priorities for respective days of the week, as shown in TABLE 3, for example, is stored in the second storage 142.

**[TABLE 3]**

| | 1 | 2 | 3 | 4 | 5 | 6 |
|---|---|---|---|---|---|---|
| Monday to Friday | Bedroom | Study | Kitchen | Living room | Japanese-style room | Children's room |
| Saturday | Living room | Kitchen | Japanese-style room | Children's room | Study | Bedroom |
| Sunday | Kitchen | Living room | Study | Japanese-style room | Children's room | Bedroom |

The voice communication device 1 includes, similar to the first modification, a clock. The selection unit 12, when selecting a voice communication terminal 2 as the partner terminal, selects the partner terminal using priorities of the pattern that corresponds to the day of the week of the current day that the clock indicates.

In the example in TABLE 3, on Monday through Friday, the voice communication terminals 2 in order of descending priorities will be the voice communication terminal 25 in the bedroom 35, the voice communication terminal 24 in the study 34, the voice communication terminal 21 in the kitchen 31, the voice communication terminal 22 in the living room 32, the voice communication terminal 23 in the Japanese-style room 33, and the voice communication terminal 26 in the children's room 36. Meanwhile, on Saturday, the voice communication terminals 2 in order of descending priorities will be the voice communication terminal 22 in the living room 32, the voice communication terminal 21 in the kitchen 31, the voice communication terminal 23 in the Japanese-style room 33, the voice communication terminal 26 in the children's room 36, the voice communication terminal 24 in the study 34, and the voice communication terminal 25 in the bedroom 35.

According to the configuration of the second modification, the voice communication device 1 can select the partner terminal using priorities that differ according to the day of the week, and as a result, the voice communication device 1 can handle a case where appropriate priorities are different according to the day of the week. For example, in the case where the voice communication terminal 2 with a high probability of having a person nearby differs according to the day of the week, appropriate priorities can be used according to the day of the week.

Also, the voice communication device 1 can, in combination of the first modification and the second modification, use priorities that are set for respective days of the week and for respective time slots.

### Embodiment 2

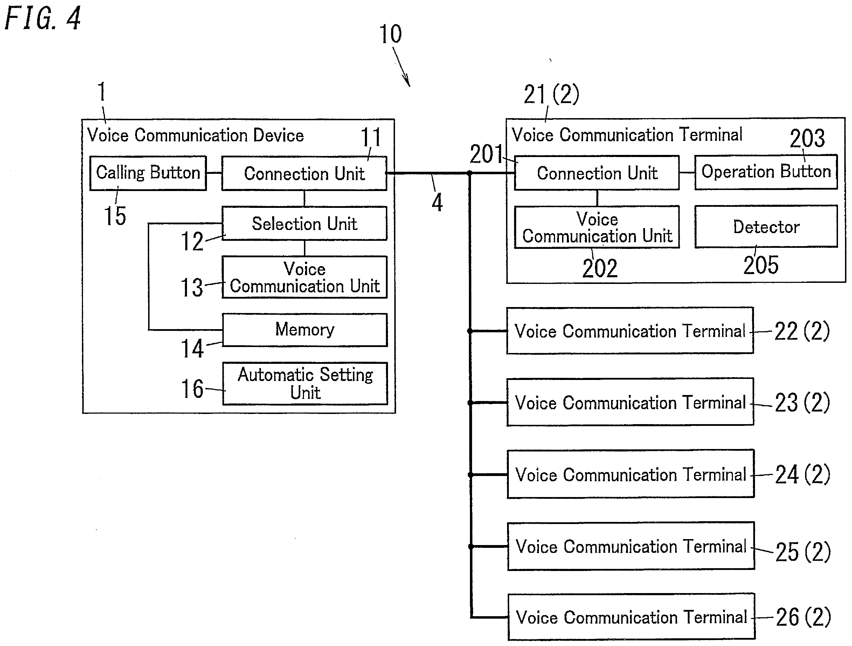

The voice communication device 1 according to the present embodiment differs from the voice communication device 1 of Embodiment 1 in that an automatic setting unit 16 configured to automatically set the priorities, based on a multiple pieces of environment information corresponding to the plurality of voice communications terminals 21, 22, 23, etc., each of the multiple pieces of environment information representing a surrounding environment of a corresponding voice communication terminal 2 of the plurality of voice communication terminals 21, 22, 23, etc. is further included, as shown in FIG. 4. Hereinafter, similar configurations to Embodiment 1 are provided with the same reference sign, and redundant description thereof will be omitted as appropriate.

That is, in the present embodiment, instead of manually setting priorities to a plurality of voice communication terminals 21, 22, 23, etc., the priorities are automatically set by an automatic setting unit 16. Therefore, in the present embodiment, the manual setting unit in a voice communication terminal 2 is omitted.

The automatic setting unit 16 is configured to set priorities based on environment information detected by a detector 205. In the present embodiment, the detector 205 is provided in each of the plurality of voice communication terminals 21, 22, 23, etc., and detects environment information relating to the voice communication terminals 2. The environment information mentioned here is information that represents a surrounding environment (such as temperature, for example) for each of the plurality of voice communication terminals 21, 22, 23, etc., and is detected by the detector 205 in each voice communication terminal 2. The voice communication device 1 acquires pieces of environment information from the plurality of voice communication terminals 21, 22, 23, etc. that are detected by the respective detectors 205, and sets priorities based on the acquired pieces of environment information.

Here, the automatic setting unit 16 is preferably configured to regularly re-set the priorities. In this case, the voice communication device 1 regularly collects the pieces of environment information detected by the detectors 205 from the plurality of voice communication terminals 21, 22, 23, etc. Accordingly, the priorities are dynamically changed, and as a result, the priorities can be appropriately set based on the current surrounding environment of each of the plurality of voice communication terminals 21, 22, 23, etc.

Alternatively, the automatic setting unit 16 may be configured to irregularly re-set the priorities in such a case where a large change in the environment information occurs, for example. In this configuration, when the magnitude of change in the environment information detected by the detector 205 exceeds a predetermined threshold, the voice communication terminal 2 transmits the environment information to the voice communication device 1, for example. The voice communication device 1 causes the automatic setting unit 16 to set the priorities every time the voice communication device 1 acquires (receives) the environment information detected by the detector 205 from any of the plurality of voice communication terminals 21, 22, 23, etc.

Note that the detector 205 is not limited to the configuration of being provided in the voice communication terminal 2, and may be provided as a body separate from the voice communication terminal 2 and externally provided to the voice communication terminal 2, or may be provided as a constituent element of the voice communication device 1.

Although the automatic setting unit 16 in the present embodiment is configured to automatically set the priorities based on the environment information as described above, the specific method of determining the priorities differs according to the type of the environment information. Therefore, the methods of determining the priorities in the automatic setting unit 16 will be described hereinafter as first to fifth configuration examples.

### First configuration example

In the present configuration example, the environment information is information that quantitatively represents a result of measuring a predetermined measurement target. The automatic setting unit 16 is configured to set the priorities to the plurality of voice communication terminals 21, 22, 23, etc. in order of magnitude of numerical values that are shown in respective pieces of the environment information such that the larger the numerical value that is shown in the environment information of a voice communication terminal 2, the higher or lower the priority of the voice communication terminal.

That is, the environment information is information, such as temperature, illuminance, humidity, altitude, received signal strength (RSSI value), or noise level, for example, in which a measurement result can be represented as a measurement value (numerical value). Therefore, the detector 205 is configured using a temperature sensor, an illuminance sensor, a humidity sensor, an altitude sensor, a measurement unit that measures received signal strength (radio wave intensity) from the voice communication device 1, or a noise sensor, for example.

In the present configuration example, the automatic setting unit 16 sets the priorities such that the larger the numerical value detected by the detector 205 in a voice communication terminal 2 as the environment information, the higher (or lower) the priority of the voice communication terminal 2. For example, in the case where the environment information is illuminance, because the larger the numerical value (illuminance) shown in the environment information of a voice communication terminal 2, the higher the probability of having a person in the vicinity of the voice communication terminal 2, the automatic setting unit 16 sets the priorities such that the larger the numerical value (illuminance) shown in the environment information of a voice communication terminal 2, the higher the priority thereof.

According to this configuration, the voice communication device 1 can set a higher priority to a voice communication terminal 2 whose probability of having a person nearby is high, and as a result, voice communication with the voice communication terminal 2 selected as the partner terminal is likely to be established.

### Second configuration example

In the present configuration example, similar to the first configuration example, the environment information is information (such as temperature, illuminance, humidity, altitude, received signal strength, for example) that quantitatively represents a result of measuring a predetermined measurement target. The automatic setting unit 16 is configured to set the priorities to the plurality of voice communication terminals 21, 22, 23, etc. according to differences between a predetermined reference value and numerical values that are shown in respective pieces of environment information such that the closer the numerical value that is shown in the environment information of a voice communication terminal 2 to the predetermined reference value, the higher or lower the priority of the voice communication terminal 2.

In the present configuration example, the voice communication device 1 stores a reference value with respect to the environment information in the memory 14 in advance. The automatic setting unit 16 compares a numerical value detected by the detector 205 as the environment information with the reference value, and set the priorities such that a voice communication terminal 2 whose difference is the smaller, the higher (or lower) the priority thereof. For example, in the case of the environment information being temperature, if the reference value is set to a suitable temperature of approximately 20 degrees, the closer the numerical value (temperature) shown in the environment information of a voice communication terminal 2 to the reference value, the higher the probability of having a person in the vicinity of the voice communication terminal 2. Therefore, the automatic setting unit 16 sets the priorities such that the closer the numerical value (temperature) shown in the environment information of a voice communication terminal 2 to the reference value, the higher the priority thereof.

According to this configuration, the voice communication device 1 can set a higher priority to a voice communication terminal 2 whose probability of having a person nearby is high, and as a result, voice communication with a voice communication terminal 2 selected as the partner terminal is likely to be established.

### Third configuration example

In the present configuration example, similar to the first configuration example, the environment information is information (such as temperature, illuminance, humidity, altitude, received signal strength, for example) that quantitatively represents a result of measuring a predetermined measurement target. The automatic setting unit 16 is configured to set the priorities to the plurality of voice communication terminals 21, 22, 23, etc. according to groups, each of groups being formed by two or more voice communication terminals whose numerical values that are shown in the respective pieces of the environment information thereof are close, such that the priorities of the two or more voice communication terminals in a same group are discontinuous.

In the present configuration example, in the case where the voice communication terminals 21, 22, 23, etc. are arranged in ascending order or descending order of the numerical values detected respectively by the detectors 205 as the environment information, the automatic setting unit 16 divides the voice communication terminals 21, 22, 23, etc. into groups of a predetermined number of the voice communication terminals 2 in order from the top. For example, in the case where the environment information is the strength (RSSI value) of a signal received from the voice communication device 1, and the voice communication terminals 21, 22, 23, etc. are arranged in descending order of the numerical values shown in the respective pieces of environment information and divided into groups of two voice communication terminals 2 in order from the top, the groups (A, B, C) and the priorities are set as shown in TABLE 4.

**[TABLE 4]**

| Voice communication terminal | Bedroom | Study | Kitchen | Living room | Japanese-style room | Children's room |
|---|---|---|---|---|---|---|
| Group | A | | B | | C | |
| Priority | 1 | 4 | 2 | 5 | 3 | 6 |

In short, if the environment information is the received signal strength, for example, the numerical values shown in the pieces of environment information of the voice communication terminals 2 that are located closely are relatively similar values, and as a result, voice communication terminals 2 that are located relatively closely belong to the same group. Also, in the case where the environment information is the altitude as well, the numerical values shown in the pieces of environment information of voice communication terminals 2 that are located on the same floor are relatively similar values, and as a result, similarly, voice communication terminals 2 that are located relatively closely belong to the same group. The automatic setting unit 16 sets the priorities such that the priorities of the voice communication terminals 2 in a same group are discontinuous, and as a result, the voice communication device 1 can avoid the occurrence of sequentially selecting voice communication terminals 2 that are located relatively closely as the partner terminal.

According to this configuration, the voice communication device 1 can sequentially select voice communication terminals 2 that are apart from each other as the partner terminal, and as a result, in the case where a person is not present in the vicinity of the voice communication terminal 2 that has been selected first as the partner terminal, the probability of having a person in the vicinity of the voice communication terminal 2 to be selected as the partner terminal next increases. Therefore, the voice communication device 1 is likely to establish voice communication with a voice communication terminal 2 selected as the partner terminal.

### Fourth configuration example

In the present configuration example, similar to the first configuration example, the environment information is information (such as temperature, illuminance, humidity, altitude, received signal strength, for example) that quantitatively represents a result of measuring a predetermined measurement target. The automatic setting unit 16 is configured to set the priorities to the plurality of voice communication terminals 21, 22, 23, etc. according to changes over time of numerical values that are shown in the respective pieces of environment information such that the larger the change over time of the numerical value that is shown in the environment information of a voice communication terminal 2, the higher or lower the priority of the voice communication terminal.

In the present configuration example, the voice communication device 1 regularly collects the pieces of environment information detected by the detectors 205 from the plurality of voice communication terminals 21, 22, 23, etc., and stores the pieces of environment information in the memory 14 as history for each of the voice communication terminals 21, 22, 23, etc. along time series. The automatic setting unit 16 obtains a change amount (magnitude of change) over time of a numerical value that is shown in the environment information from the history in the memory 14 for each of the voice communication terminals 21, 22, 23, etc., and sets the priorities such that the larger the change amount of a voice communication terminal 2, the higher (or lower) the priority of the voice communication terminal. For example, in the case where the environment information is the temperature, the larger the change amount of the numerical value (temperature) that is shown in the environment information of a voice communication terminal 2, the higher the probability of having a person in the vicinity of the voice communication terminal 2, and as a result, the automatic setting unit 16 sets the priorities such that the larger the change amount of the numerical value (temperature) that is shown in the environment information of a voice communication terminal 2, the higher the priority of the voice communication terminal.

According to this configuration, the voice communication device 1 can set a higher priority to a voice communication terminal 2 whose probability of having a person nearby is high, and as a result, voice communication with a voice communication terminal 2 selected as the partner terminal is likely to be established.

### Fifth configuration example

In the present configuration example, the environment information is information that represents whether or not a specific event has happened. The automatic setting unit 16 is configured to set the priorities to the plurality of voice communication terminals 21, 22, 23, etc. in order of the number of occurrences of the specific event such that the larger the number of occurrences of the specific event, the higher or lower the priority.

That is, the environment information is information that can represent a measurement result by using binary values of occurrence or non-occurrence of an event such as an operation of an electrical household appliance (television or air conditioner), detection of a person, opening/closing of a door or window, or detection of vibration, for example. Therefore, the detector 205 is configured by using a sensor for monitoring an operation of an electrical household appliance, an infrared human detection sensor, a human detection sensor using an image recognition technique, an open/close sensor, or a vibration sensor, for example.

In the present configuration example, the automatic setting unit 16 sets priorities such that the larger the number of detection of occurrence of an event by the detector 205 of a voice communication terminal 2 as the environment information, the higher (or lower) the priority of the voice communication terminal 2. For example, in the case where the event is an operation of an electrical household appliance, the larger the number of occurrences of the event, the higher the probability of having a person in the vicinity of the voice communication terminal 2, and as a result, the automatic setting unit 16 sets the priorities such that the larger the number of occurrences of the event, the higher the priority of the voice communication terminal 2.

Note that, the number of occurrences may be reset at regular intervals. That is, the number of occurrences mentioned in the present configuration example is a concept that includes number of occurrences in a fixed period, that is, frequency of occurrence.

According to this configuration, the voice communication device 1 can set a higher priority to a voice communication terminal 2 whose probability of having a person nearby is high, and as a result, voice communication with a voice communication terminal 2 selected as the partner terminal is likely to be established.

Also, the first to fifth configuration examples described above may be applied to the voice communication device 1 in combination.

Furthermore, the automatic setting unit 16 can set the priorities based on various environment information, in addition to the first to fifth configuration examples described above.

Also, the configuration of the present embodiment can be appropriately combined with the first modification and the second modification of Embodiment 1. That is, the automatic setting unit 16 counts the number of occurrences of an event for each time slot or each day of the week, and sets the priorities based on the number of occurrences of the event in the corresponding time slot or day of the week, for example.

Incidentally, in the embodiments described above, the voice communication system 10 configured such that the voice communication device 1 directly communicates with each of the plurality of voice communication terminals 21, 22, 23, etc. is illustrated as an example, but the configuration of the voice communication system 10 is not limited thereto. For example, the voice communication system 10 may be configured such that the voice communication device 1 is divided into a voice communication unit (not shown) and a relay unit (not shown), and the voice communication unit communicates with each of the plurality of voice communication terminals 21, 22, 23, etc. via the relay unit.

In this case, in the voice communication device 1, the selection unit 12 may be included in either the voice communication unit or the relay unit. In the case where the selection unit 12 is included in the relay unit, the voice communication device 1 selects the partner terminal by using the relay unit.

### Method of selecting voice communication terminal and program

The technical concepts described in the aforementioned embodiments can be realized by a "method of selecting voice communication terminal" or a "program" described below.

The "method of selecting voice communication terminal" is a method of selecting a voice communication terminal to serve as a partner terminal in a voice communication device 1 including a connection unit 11 configured to establish links with a plurality of voice communication terminals 21, 22, 23, etc. and a voice communication unit 13. The method of selecting a voice communication terminal is to select, in a state in which the links have been established between the connection unit 11 and the plurality of voice communication terminals 21, 22, 23, etc., one voice communication terminal as a partner terminal from the plurality of voice communication terminals 21, 22, 23, etc. The voice communication unit 13 includes a function of performing voice communication with the voice communication terminal selected as the partner terminal. Here, the method of selecting voice communication terminal is to select, according to priorities that are respectively set to the plurality of voice communication terminals 21, 22, 23, etc., a voice communication terminal as the partner terminal from the plurality of voice communication terminals 21, 22, 23, etc., in order of descending priorities.

Also, the "program" is a program for causing a computer to function as the voice communication device 1 including the connection unit 11, the selection unit 12, and the voice communication unit 13. The connection unit 11 is configured to establish links with the plurality of voice communication terminals 21, 22, 23, etc. The selection unit 12 is configured to select, in a state in which the links have been established between the connection unit 11 and the plurality of voice communication terminals 21, 22, 23, etc., one voice communication terminal as a partner terminal from the plurality of voice communication terminals 21, 22, 23, etc. The voice communication unit 13 includes a function of performing voice communication with the partner terminal selected by the selection unit 12. The selection unit 12 is configured to select, according to priorities that are respectively set to the plurality of voice communication terminals 21, 22, 23, etc., a voice communication terminal as the partner terminal from the plurality of voice communication terminals 21, 22, 23, etc., in order of descending priorities.

Note that the program may be pre-stored in a memory, or may be provided via a storage medium such as a memory card that stores the program or an electric communication line such as the Internet.

Also, the aforementioned "method of selecting voice communication terminal" and the "program" can be applied in combination with all the configurations described in the aforementioned embodiments (including the first modification and the second modification of Embodiment 1, and the first to fifth configuration examples of Embodiment 2).

## Claims

1. A voice communication device comprising:
a connection unit configured to establish links with a plurality of voice communication terminals;
a selection unit configured to select, in a state in which the links have been established between the connection unit and the plurality of voice communication terminals, one voice communication terminal as a partner terminal from the plurality of voice communication terminals; and
a voice communication unit including a function of performing voice communication with the partner terminal selected by the selection unit,
the selection unit being configured to select, according to priorities that are respectively set to the plurality of voice communication terminals, the one voice communication terminal as the partner terminal from the plurality of voice communication terminals, in order of descending the priorities.

2. The voice communication device according to claim 1, wherein the selection unit is configured to select the one voice communication terminal as the partner terminal in order of descending the priorities, by sequentially switching a voice communication terminal to be selected as the partner terminal from the plurality of voice communication terminals.

3. The voice communication device according to claim 2, wherein the voice communication unit is configured to perform the voice communication with the partner terminal every time the one voice communication terminal is selected as the partner terminal by the selection unit.

4. The voice communication device according to any one of claims 1 to 3, wherein the selection unit is configured to change the one voice communication terminal, which is to be selected as the partner terminal from the plurality of voice communication terminals, from a first voice communication terminal, which is currently selected as the partner terminal, to a second voice communication terminal, which has a next highest priority to the first voice communication terminal, every time end processing of the voice communication with the partner terminal is performed by the voice communication unit, in an establishment period from when the links are established until when the links are disconnected.

5. The voice communication device according to any one of claims 1 to 4, further comprises a first storage configured to store patterns so as to correspond to time slots one to one, each of the patterns being a set of the priorities for a corresponding time slot of the plurality of voice communication terminals, wherein
the selection unit is configured to select the partner terminal according to priorities of a pattern corresponding to a current time slot among the patterns stored in the first storage.

6. The voice communication device according to any one of claims 1 to 5, further comprises a second storage configured to store patterns so as to correspond to days of a week one to one, each of the patterns being a set of the priorities for a corresponding day of the week of the plurality of voice communication terminals, wherein
the selection unit is configured to select the partner terminal according to priorities of a pattern corresponding to a current day of the week among the patterns stored in the second storage.

7. The voice communication device according to any one of claims 1 to 6, further comprises an automatic setting unit configured to automatically set the priorities, based on a multiple pieces of environment information corresponding to the plurality of voice communications terminals, each of the multiple pieces of environment information representing a surrounding environment of a corresponding voice communication terminal of the plurality of voice communication terminals.

8. The voice communication device according to claim 7, wherein
each of the multiple pieces of environment information is information that quantitatively represents a result of measuring a predetermined measurement target, and
the automatic setting unit is configured to set the priorities to the plurality of voice communication terminals in order of magnitude of numerical values that are shown in the multiple pieces of environment information such that the larger a numerical value that is shown in environment information of a voice communication terminal, the higher or lower a priority of the voice communication terminal.

9. The voice communication device according to claim 7, wherein
each of the multiple pieces of environment information is information that quantitatively represents a result of measuring a predetermined measurement target, and
the automatic setting unit is configured to set the priorities to the plurality of voice communication terminals according to differences between a predetermined reference value and numerical values that are shown in the multiple pieces of environment information such that the closer a numerical value that is shown in environment information of a voice communication terminal to the predetermined reference value, the higher or lower a priority of the voice communication terminal.

10. The voice communication device according to claim 7, wherein
each of the multiple pieces of environment information is information that quantitatively represents a result of measuring a predetermined measurement target, and
the automatic setting unit is configured to set the priorities to the plurality of voice communication terminals according to groups, each of groups being formed by two or more voice communication terminals, of which numerical values that are shown in two or more pieces of environment information, are close, such that priorities of the two or more voice communication terminals in a same group are discontinuous.

11. The voice communication device according to claim 7, wherein
each of the multiple pieces of environment information is information that quantitatively represents a result of measuring a predetermined measurement target, and
the automatic setting unit is configured to set the priorities to the plurality of voice communication terminals according to changes over time of numerical values that are shown in the multiple pieces of environment information such that the larger a change over time of a numerical value that is shown in environment information of a voice communication terminal, the higher or lower a priority of the voice communication terminal.

12. The voice communication device according to claim 7, wherein
each of the multiple pieces of environment information is information that represents whether or not a specific event has happened, and
the automatic setting unit is configured to set the priorities to the plurality of voice communication terminals in order of the number of occurrences of the specific event such that the larger the number of occurrences of the specific event that is shown in environment information of a voice communication terminal, the higher or lower a priority of the voice communication terminal.

13. A voice communication system comprising:
the voice communication device according to any one of claims 1 to 12; and
the plurality of voice communication terminals.
